# EUROPÄISCHE PATENTSCHRIFT

(11) **EP 0 373 301 B1**
(45) Veröffentlichungstag und Bekanntmachung des Hinweises auf die Patenterteilung: **22.09.1993**
(21) Anmeldenummer: 89116170.5
(22) Anmeldetag: 01.09.1989
(51) Int. Cl.: E05F 11/38, E05F 11/44

(54) **Vorrichtung zur einstellbaren Befestigung einer Autofensterscheibe an einer Fensterhebeeinrichtung**
Adjustable fixation of a car window to a window regulator apparatus
Dispositif de fixation réglable d'une vitre de voiture sur un appareil de lève-vitre

(30) Priorität: 12.12.1988 DE 3841781
(43) Veröffentlichungstag der Anmeldung: 20.06.1990
(73) Patentinhaber: Brose Fahrzeugteile GmbH & Co. KG, 96450 Coburg (DE)
(72) Erfinder: Köhler, Dieter, D-8601 Untermerzbach (DE); Schust, Gerhard, D-8621 Weidhausen (DE); Schad, Ottmar, D-8631 Meeder (DE)
(74) Vertreter: Ninnemann, Detlef, Dipl.-Ing.

(56) Entgegenhaltungen:
- DE-A- 3 037 851
- US-A- 4 183 178

## Beschreibung

Die Erfindung betrifft eine Vorrichtung zur einstellbaren Befestigung einer Autofensterscheibe an einer Fensterhebeeinrichtung.

Autofensterscheiben befinden sich im allgemeinen zwischen zwei Führungen und werden durch die Fensterhebeeinrichtung entlang dieser Führungen beim Öffnen und Schließen des Autofensters bewegt. Die Autofensterscheibe soll in jeder Position dicht sein, klemmfrei in den Führungen laufen und darf nicht klappern. Hierzu ist es erforderlich, den Anlenkpunkt der Fensterhebeeinrichtung quer zur Heberichtung einstellen zu können.

Derartige Einstellvorrichtungen müssen in eingebautem Zustand im allgemeinen einjustiert werden, um sicherzustellen, daß die Autofensterscheibe dem vorgesehenen Hebeweg während der Auf- und Abwärtsbewegung folgt. Dabei soll die Autofensterscheibe in ihren seitlichen Führungen spaltfrei und leichtgängig laufen und in ihrer oberen Einstellung eine gewünschte Orientierung annehmen.

Insbesondere bei Fensterhebeeinrichtungen mit nahezu geraden Abzugslinien des oberen Festpunktes, bei denen die Scheibenkanten A- und B-säulenseitig in U-förmigen Führungs- und Dichtprofilen geführt werden, kommt es in der Praxis häufig zu einer parallelen Verschiebung oder Verkippung der Scheibe in der Scheibenebene in Richtung A- oder B-Säule. Durch fertigungstechnische Toleranzen an der Scheibe und/oder an den Türabmessungen kann sich eine max. Abweichung von +/- 2-3 mm von der Idealabzugslinie des oberen Anlenkpunktes der Fensterhebeeinrichtung ergeben.

Um hier Abhilfe zu schaffen erfolgt z.B. bei Kreuzarm-Fensterhebeeinrichtungen der Ausgleich dieser Abweichung einerseits an einer unteren Führungsschiene für die Führung des unteren Anlenkpunktes über ein in der Führungsschiene befindliches Langloch und andererseits an dem diesem unteren Anlenkpunkt gegenüberliegenden oberen Festpunkt an der Führungs- und Hebeschiene. Bei Verschiebung der unteren Führungsschiene im Langloch kippt die Autofensterscheibe in Scheibenebene um den oberen Festpunkt der Führungs- und Hebeschiene. Versetzt man dagegen den oberen Anlenkpunkt horizontal auf der Führungs- und Hebeschiene, wird wieder eine Parallelität der Autofensterscheibe in Scheibenebene gegenüber der Idealabzugslinie und damit den Führungen an der A- und B-Säule der Fahrzeugtür erreicht. Als Mittel zum Befestigen des oberen Anlenkpunktes des Kreuzarm-Fensterhebers in einer in horizontaler Richtung dicht neben der ursprünglichen Lage befindlichen zweiten Einstellposition wurde bisher ein Anschlag für den Anlenkpunkt in Form eines geprägten Blechteils, das durch eine Schraube in der Führungs- und Hebeschiene verklemmt wird, verwendet. Will man auch die entgegengesetzte horizontale Verschieberichtung des Anlenkpunktes sichern, so wird zusätzlich ein zweites Blechteil auf der anderen Seite des Anlenkpunktes in gleicher Art und Weise über eine Schraube in der Führungs- und Hebeschiene verklemmt.

Bei dieser Art der Justierung des oberen festen Anlenkpunktes einer Fensterhebeeinrichtung im in der Fahrzeugtür eingebauten Zustand hat sich als nachteilig herausgestellt, daß sich durch unsachgemäßes Anziehen der Klemmschrauben oder durch in der Praxis nicht vollkommen gradliniges Abziehen des Anlenkpunktes entweder die Verklemmung des Prägeteils nach einiger Zeit wieder löst, oder daß sich durch zu starkes Anziehen der Klemmschraube die Führungs- und Hebeschiene an dieser Stelle deformiert. Auch läßt sich das Prägeteil bzw. der Anschlag selbst bei zuvor ordnungsgemäß angezogener Schraube oft nur schwer in einer dicht daneben befindlichen zweiten Lage fixieren, da die Schraube bzw. das Prägeteil bestrebt ist, in die ursprüngliche Kerbe oder Vertiefung, die beim ersten Anziehen in der Führungs- und Hebeschiene entstanden ist, wieder zurückzugleiten.

Diese bekannte Art der Verklemmung eines Anlenkpunktes auf einer Führungs- und Hebeschiene ist daher nur schwer variierbar, da nach einmaligem Anschrauben in der Führungs- und Hebeschiene aus Leichtmetall Kerben entstehen können.

Mit der DE-PS 30 37 851 ist ein Fensterheber gemäß dem Oberbegriff des Anspruch 1, insbesondere für Kraftfahrzeuge, bekannt geworden mit einer an einer Fensterscheibe angreifenden Hebeschiene, einem mit der Hebeschiene verbundenen, längs einer Führungsschiene verschiebbaren Mitnehmer zur Führung der Hebeschiene und damit der Fensterscheibe auf einem vorgegebenen Weg und einem Antrieb zum Anheben und Absenken der Fensterscheibe.

Um die Justierung eines solchen Fensterhebers beim Einbau zu erleichtern, kann die Hebeschiene gegenüber der Mitnehmerschiene, d.h. parallel zur unteren Querkante der Fensterscheibe verstellt werden. Dazu ist ein "drittes Langloch" am linken Ende der Hebeschiene vorgesehen, welches in Längsrichtung von zueinander parallelen Schienen verläuft. Ein am linken Ende eines Scherenarms angebrachter Schwenkbolzen durchsetzt das Langloch. Um diesen Schwenkbolzen in einer bestimmten Lage innerhalb des Langlochs zu halten, ist eine längs des Langlochs verlaufende Stellschraube vorgesehen, deren rechtes Ende in einer Querbohrung des Schwenkbolzens verdrehbar, jedoch axial unverrückbar befestigt ist, und die mit ihrem Gewindeabschnitt einen von einem Z-Winkel abstehenden mit einem entsprechenden Innengewinde versehenen Lappen durchsetzt. Bei einer Drehung der Stellschraube wird diese folglich in Richtung der Schraubenachse verschoben und mit ihr der Schwenkbolzen. Dementsprechend verschiebt sich die Hebeschiene in Längsrichtung, da die die Schiene führenden beiden Langlöcher zueinander parallel sind.

Eine solche Justiereinrichtung kann jedoch nur nach dem Einbau des Fensterhebers in die Autotür sinnvoll genutzt werden, d.h. bei der Produktion der Autotüren muß jeder Fensterheber im Innerern der Tür unter schwierigen Umständen (schwer zugänglicher Arbeitsbereich) über die Stellschraube und ihre Kontermutter individuell eingestellt werden. Dies belastet die Großserienfertigung mit langen Montagezeiten und damit mit Kosten.

Der Erfindung liegt daher die Aufgabe zugrunde, eine Vorrichtung der eingangs genannten Art zu schaffen, die vor der endgültigen Montage der Autofensterscheibe bzw. der Hebeeinrichtungen in der Autotür auf einfache Weise anbringbar und in kleinen nach beiden Seiten leicht variierbaren Schritten voreinstellbar ist.

Diese Aufgabe wird erfindungsgemäß dadurch gelöst, daß zwischen der Führungs- und Hebeschiene und dem Anlenkteil eine am Anlenkteil und der Führungs- und Hebeschiene fixierbare Federspange angeordnet ist, die mehrere Schnappelemente aufweist, von denen wenigstens ein Schnappelement in eines oder mehrere horizontal auf der Führungs- und Hebeschiene mit Abstand voneinanderliegende Einrastelemente zur horizontalen Verstellung der Federspange einrastbar ist.

Mit der Erfindung werden breite Anwendungsmöglichkeiten überall dort erschlossen, wo aus fertigungstechnischen oder Dimensionierungsgründen der Verlauf eines Anlenkpunktes für das Heben und Senken einer Autofensterscheibe parallel versetzt werden muß.

Abweichungen der Fensterscheibenführungen in den aus unterschiedlichen Fertigungen herrührenden Kraftwagentüren und Fensterscheiben sowie aus den für unterschiedliche Kunden vorgesehenen Fensterhebeeinrichtungen können durch Voreinstellung des Fensterhebersystems bereits werksseitig ausgeglichen werden. Eine bisher übliche Nachjustierung nach dem Einbau der Fensterhebeeinrichtung in die Kraftwagentür kann bei werksseitiger Einstellung der erfindungsgemäßen Vorrichtung weitestgehend vermieden werden, sie bleibt jedoch auf einfache Weise auch noch nachträglich im Einbauzustand der Fensterhebeeinrichtung in der Tür möglich.

Nach einer bevorzugten Ausführungsform der Erfindung ist das Anlenkteil in Form eines Schwenkbolzens ausgebildet, der an seinem der U-förmigen Führung Eines Führungs- und Hebeschienenstücks zugewandten Ende mit einer abgeflachten Halbkugel und an seinem anderen Ende von zwei nasenförmigen Klipszungen der Federspange an einer konischen Fläche gehalten wird, wobei die konische Fläche in Höhe der Federspangen-Grundebene als zylindrischer Schwenkbolzen zur getrieblichen Anlenkung mit der Fensterhebeeinrichtung ausläuft. Durch die Ausbildung dieses an einem Scherenarm der Fensterhebeeinrichtung befindlichen Schwenkbolzens wird die Kraft des Scherenarms der Fensterhebeeinrichtung direkt über das Anlenkteil und die Führungs- und Hebeschiene auf die Autofensterscheibe übertragen. Durch die halbkugelförmige Ausbildung des Schwenkbolzens werden unterschiedliche Neigungswinkel der Autofensterscheibe in der Tür gegenüber der Fensterhebeeinrichtung ausgeglichen.

Zur leichten werksseitigen Einstellbarkeit des Anlenkteils umgreift die Federspange das Führungs- und Hebeschienenstück über zwei an einer ihrer Längsseiten angeordnete, einander gegenüberliegende, mit Absätzen versehene Federarme deckelförmig an den Stirnwänden. Sie wird außerdem einerseits an den Federarmanlenkungen und andererseits auf ihrer gegenüberliegenden Längsseite über Halte-und Führungskrallen am Führungs- und Hebeschienenstück gehalten und geführt und weist mittig zwei weitere einander gegenüberliegende mit Lappen versehene Federarme auf, die in entsprechende Aussparungen im Führungs- und Hebeschienenstück einrastbar sind. Durch die beiden mit Absätzen versehenen Federarme kann die Nulleinstellung des verschiebbaren Anlenkteils am Führungs- und Hebeschienenstück leicht und sicher werksseitig vorgenommen werden. Mit Hilfe der Halte- und Führungskrallen wird das Anlenkstück am Führungs- und Hebeschienenstück gehalten und geführt, so daß auf einfache Art und Weise auch noch nachträglich bei einer notwendig werdenden Verschiebung des voreingestellten Nullpunktes einer der Lappen der Federarme in die entsprechende Aussparung im Führungs- und Hebeschienenstück einrastbar ist.

Zur leichteren Anordnung der Federspange am Führungs- und Hebeschienenstück ist die Federspange nach einer weiteren vorteilhaften Ausbildung der Erfindung über Halte- und Führungskrallen an Haltestegen des Führungs- und Hebeschienenstücks einklipsbar. Dadurch kann das Anlenkteil leicht und kostengünstig senkrecht von oben auf das Führungs- und Hebeschienenstück aufgesetzt und verankert werden.

In vorteilhafter Weise weisen die Federarme jeweils zwei aus ihnen herausgetrennte, zur Symmetrieachse der Führungsschiene parallele umgebogene Lappen auf. Diese doppelte Ausbildung der Lappen in jedem Federarm verbessert die Einrastung der Federarme und damit der Federspange im Führungs- und Hebeschienenstück. Die Möglichkeit des Herausspringens oder Abscherens der Lappen aus den Aussparungen des Führungs- und Hebeschienenstücks ist dadurch weiter vermindert. Zum leichteren Einrasten der Federarmenden in dem Führungs- und Hebeschienenstücks sind die freien Enden der Lappen abgerundet. Damit wird sowohl eine werksseitige als auch eine nachträglich notwendig werdende Einstellung der Federspange gegenüber dem Führungs- und Hebeschienenstück erleichtert.

Nach der Montage der mit dem Führungs- und Hebeschienenstück verbundenen Fensterscheibe in der Autotür kann der an seinem Ende halbkugelförmig ausgebildete Schwenkbolzen zusammen mit der Fensterhebeeinrichtung dadurch leicht durch einfaches Eindrücken mit der Federspange verbunden werden, daß die nasenförmigen Klipszungen der Federspange zwei gegeneinander gerichtete widerstandsfähige, aus der Federspangen-Grundebene stumpfwinklig herausgebogene Zungen aufweisen, die spitzwinklig an der Konusfläche des Schwenkbolzens umgebogen sind.

Damit diese nasenförmigen Klipszungen nach der Montage im Einsatz bei Vereisung der Autofensterscheibe nicht durch übermäßige Krafteinwirkung der Fensterhebeeinrichtung auf die Federspange bzw. die Fensterscheibe in umgekehrter Richtung, d.h. in Richtung der Federspangen-Grundebene verformt oder verbogen werden können, sind die Klipszungen nach einer weiteren vorteilhaften Ausbildung der Erfindung nach den spitzwinkligen Umbiegungen nochmals stumpfwinklig in Richtung der Halbkugeloberfläche des Schwenkbolzens zurückgebogen.

In weiterer vorteilhafter Ausbildung der Erfindung ist die Federspange an den vier äußersten Ecken ihrer Grundebene durch federnde Abknickungen in Richtung der abgeflachten Haltestege des U-förmigen Führungs- und Hebeschienenstücks federnd gelagert. Dadurch wird erreicht, daß die Halte- und Führungskrallen der Federspange mit Vorspannung in den Haltestegen des Führungs- und Hebeschienenstücks anliegen. Beim Verschieben der Federspange können durch die federnde Auflage der Federspange auf dem Führungs- und Hebeschienenstück die Verhakungen der Halte- und Führungskrallen kurzzeitig aufgehoben werden.

Zur leichteren Verschiebbarkeit der Federspange von Hand weist nach einer anderen vorteilhaften Ausbildung der Erfindung die Federspange in ihrem mittleren Bereich zwischen den Halte- und Führungskrallen zwei einander gegenüberliegende über die abgeflachten Haltestege hinausragende Verschiebelaschen auf.

Aus Fertigungsvereinfachungsgründen, zur Verhinderung von eventuellen Klappergeräuschen und um dem Anlenkpunkt eine Toleranzausgleichsfunktion zu geben, wird in einer weiteren vorteilhaften Ausführungsform der Erfindung vorgeschlagen, daß das Anlenkteil in Form eines an sich bekannten Gleitstücks aus Kunststoff ausgebildet ist, das in einer Führungs- und Hebeschiene verschiebbar ist, wobei Lappen einer mit dem Gleitstück verbundenen Federspange an über das Gleitstück hinausragenden Federarmen angeordnet sind, die mit Aussparungen in der Führungs- und Hebeschiene zusammenarbeiten. Die federnden Bügel des Gleitstücks haben eine ausgleichende Funktion, wenn dieser Anlenkpunkt der Fensterhebeeinrichtung in der Praxis nicht der geraden idealen Abzugslinie folgen sollte.

Gemäß einer bevorzugten Weiterbildung der Erfindung ist vorgesehen, daß die Federspange in Längsrichtung auf einem Drittel ihrer Länge so geschlitzt ist, daß sie zwei Federarme aufweist, daß jeder dieser Federarme wenigstens einen Lappen aufweist, daß die beiden Lappen zugeordneten Aussparungen in Verschieberichtung gegeneinander versetzt sind und wobei die Federspange zusätzlich mit zwei Zungen versehen ist, die in Aussparungen des Gleitstücks eingreifen. Durch diese Anordnung der Federarme an der Federspange besteht die Möglichkeit des Verstellens der Federspange unabhängig von der Breite der auf dem Federarm angeordneten Lappen bzw. der Aussparungen, so daß auch kleinste Verstellwege der Federspange eingestellt werden können. Dabei ist es gleichgültig, wie oft und in welcher Richtung eine Justierung der Federspange werksseitig vorher bereits erfolgt war.

Ferner ist es zweckmäßig, daß die Federspange mit Zungen in bereits vorhandene Aussparungen im Gleitstück eingreift. Dadurch erübrigt sich eine gesonderte Befestigung der Federspange am Gleitstück und die Montage wird erleichtert.

Es empfiehlt sich nach einer weiteren Ausbildung der Erfindung, daß die Breite der Aussparung etwa gleich ihrem halben Mittenabstand ist. Die Einstellschritte bei der Justierung entsprechen dann der Breite der Aussparung und es ist ein leichteres Einstellen bei der Montage der Teile möglich. Die in das Gleitstück in die bereits vorhandenen Aussparungen eingreifenden Zungen der Federspange können dabei vorteilhaft parallel zur Wandung des Gleitstücks, d.h. im stumpfen Winkel zueinander aus der Federspange herausgetrennt und umgebogen ausgebildet sein. Durch diese Anordnung der Zungen schmiegen sich diese besser an die Innenwände des Gleitstücks an und verhindern so bei starken Querbelastungen eine Beschädigung oder ein Ausreißen der Innenwände am Kunststoff-Gleitstück.

Um beim Zusammenbau der Fensterhebeeinrichtung mit der Fensterscheibe das Gleitstück und die Federspange mit einem Griff verarbeiten zu können, sind die Zungen mit einem Abstand zueinander auf der Federspange angeordnet, der etwas kleiner ist, als die Dicke einer Zwischenwand des Gleitstücks, so daß die Federspange bei der Montage über die Zungen in das Gleitstück einklipsbar ist.

Gemäß einer weiteren Ausgestaltung der Erfindung ist die Federspange gewellt. Dadurch bekommt das Gleitstück neben der bereits vorhandenen Vorspannung zwischen den vier federnden Bügeln des Gleitstücks und der Führungs- und Hebeschiene zusätzlich noch eine weitere Vorspannung im rechten Winkel dazu zur Verhinderung von Klappergeräuschen und zur flexiblen Anpassung des Gleitstücks innerhalb der Führungs- und Hebeschiene ohne Gefahr der Verklemmung.

Ferner ist es in diesem Zusammenhang zweckmäßig, daß die Federarme stumpfwinklig an der Federspange angeordnet sind. Bei Belastung der stumpfwinklig von der Federspange abstehenden Federarme in Verschieberichtung erhöht sich ihre in Verschieberichtung wirkende Kraftkomponente auf die Führungsschiene,so daß die Gefahr des Herausrutschens der Lappen aus den Aussparungen in vorteilhafter Weise vermindert wird.

Es empfiehlt sich ferner, daß die Federarme an ihren äußersten Enden widerhakenförmige Umbiegungen aufweisen. Damit ist eine leichtere und sicherere Eingriffsmöglichkeit, d.h. ein besserer Halt gegen Abrutschen des hakenförmigen Montagewerkzeugs aus Richtung Türinnen- bzw. Gestängeseite bei der nachträglichen werksseitigen Justierung gegeben.

Die Erfindung wird im folgenden an einem Ausführungsbeispiel anhand der Zeichnung erläutert. Es zeigt:
- Figur 1: eine vereinfachte Vorderansicht eines Kreuzarmfensterhebers mit einer Fensterhebeeinrichtung mit geradlinig abziehendem Anlenkpunkt;
- Figur 2: eine erste beispielhafte Ausführungsform einer Federspange in geschnittener Seitenansicht;
- Figur 2a: eine Draufsicht der in Figur 2 dargestellten Federspange;
- Figur 3: einen Schnitt durch den linken oberen feststehenden Anlenkpunkt des in Figur 1 dargestellten Kreuzarmfensterhebers in geschnittener Seitenansicht BB mit der in den Figuren 2 und 2a dargestellten ersten Federspange im Einbauzustand mit einem Führungs- und Hebeschienenstück;
- Figur 3a: eine Draufsicht auf die Anordnung gemäß Figur 3;
- Figur 3b: eine Schnittdarstellung der Anordnung von Figur 3a längs der Linie CC;
- Figur 4: eine den Stand der Technik darstellende vereinfachte Vorderansicht eines weiteren Kreuzarmfensterhebers mit einer Fensterhebeeinrichtung mit gleichfalls, wie in Figur 1 dargestellt, geradlinig abziehendem Anlenkpunkt;
- Figur 5: eine zweite bespielsweise Ausführungsform einer Federspange;
- Figur 6: ein Schnitt durch den linken oberen feststehenden Anlenkpunkt des in Figur 4 dargestellten Kreuzarmfensterhebers in geschnittener Seitenansicht FF mit der in den Figur 5 und 5a dargestellten zweiten Federspange im Einbauzustand mit einem Gleitstück in einer Führungs- und Hebeschiene;
- Figur 6a: eine Draufsicht auf die Anordnung gemäß Figur 6 und
- Figur 6b: eine Schnittdarstellung der Anordnung von Figur 6a längs der Linie GG.

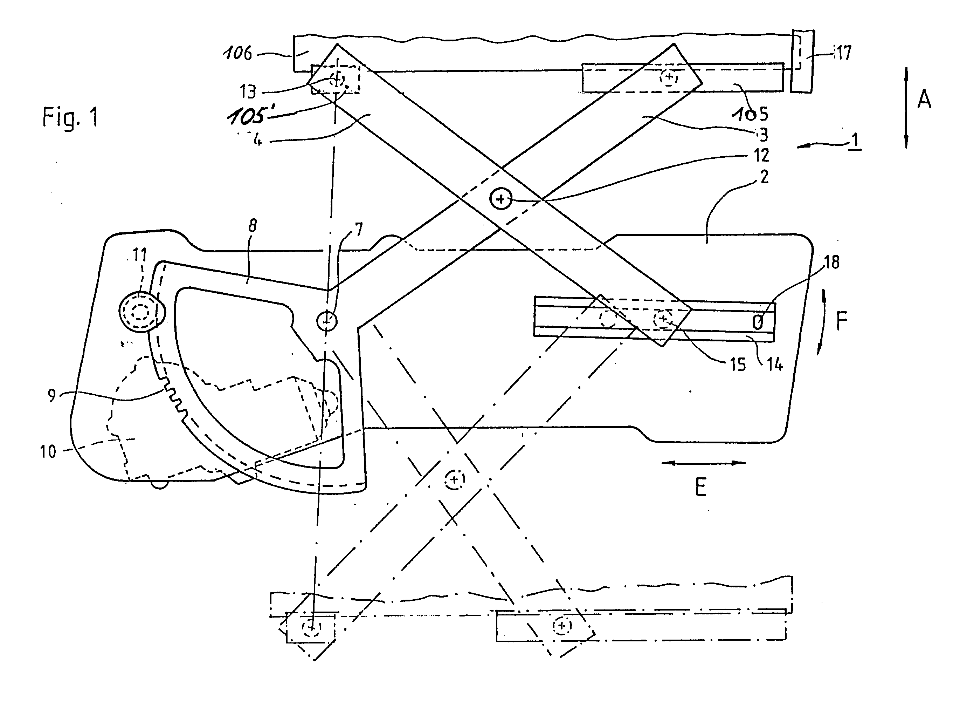

In Figur 1 besteht der Kreuzarm-Fensterheber 1 im wesentlichen aus einer im Türinneren angebrachten Grundplatte2, die auch von einem Aggregateträger oder dergleichen gebildet werden kann, einer Kreuzarm-Anordnung aus einem Hauptarm 3 und einem Hilfsarm 4. Die oberen Endpunkte der Kreuzarm-Anordnung verschieben zwei am unteren Querrand einer Autofensterscheibe 106 befestigte Führungs- und Hebeschienen 105, 105′ in vertikaler Richtung A hin und her.

Der Hauptarm 3 ist über einen Lagerbolzen 7 an der Grundplatte 2 drehbar gelagert. Mit dem Hauptarm 3 ist ein Zahnsegmentbogen 8 starr verbunden, insbesondere verschweißt, in dessen Außenverzahnung 9 ein in Figur 1 angedeutetes, von einem ebenfalls angedeutetem Elektromotor 10 angetriebenes Ritzel 11, eingreift. Zusätzlich oder alternativ zum Elektromotor-Antrieb 10 kann auch ein Handkurbel-Antrieb vorgesehen sein. Das vom Lagerbolzen 7 ferne, freie Ende des Hauptarms 3 ist in nicht dargestellter Weise z.B. über Führungsrollen oder Gleitstücke mit der Führungs- und Hebeschiene 105 verbunden. Der Hilfsarm 4 wird bei einer Drehbewegung des Hauptarms 3 mit verschwenkt, wozu er über ein Drehlager 12 an dem starren Bauteil - Hauptarm 3, Zahnsegment 8 - drehbar gelagert ist. Im dargestellten Ausführungsbeispiel befindet sich Drehlager 12 genau in der Längenmitte des Hauptarms. Das gleiche gilt für den Hilfsarm 4 dessen gemeinsames Drehlager 12 mit dem Hauptarm 3 gleichfalls die Längenmitte zwischen dem an der Führungs- und Hebeschiene 105 angreifenden Anlenkpunkt 13 und dem an der Hilfsschiene 14 über einen längs der Schiene verschiebbaren Gleitstein oder über ein Schwenklager verbundenen Anlenkpunkt 15 bildet. Der Hilfsarm 4 wird bei einer Drehbewegung des Hauptarms 3 mit verschwenkt, wozu er über das Drehlager 12 an dem starren Bauteil - Hauptarm 3, Zahnsegmentbogen 8 - drehbar gelagert ist. Der Hilfsarm 4 bildet daher einen Doppelarmhebel, dessen eines Ende an der Führungs- und Hebeschiene 105' über eine horizontal längs der Schiene 105' verschiebbare Federspange (nicht dargestellt) angreift. Das andere Ende des Hilfsarms 4 ist mit einem Gleitstein, einer Führungsrolle oder dergleichen in der Hilfsschiene 14 in der Schienen-Längsrichtung E verschiebbar geführt.

Aufgrund der Geometrie des dargestellten Kreuzarmfensterhebers 1 wird beim Herablassen der Autofensterscheibe 106, die in U-förmigen Führungs- und Dichtungsprofilen 17 geführt ist, der Anlenkpunkt 13 am Hilfsarm 4 mit einem Anlenkteil auf einer geraden Linie nach unten in die strichpunktiert dargestellte Position herabgezogen. Aus Gründen der vereinfachten Darstellung wurde der Zahnsegmentbogen in dieser unteren Lage 8 nicht strichpunktiert dargestellt. Bei der Abwärtsbewegung des Anlenkpunktes 13 kann sich aufgrund von fertigungstechnischen Toleranzen an der Scheibe oder an der Türinnengeometrie eine maximale Abweichung von +/- 3 mm von der Idealabzugslinie ergeben. Um die daraus resultierende Verkippung und Verschiebung der Autofensterscheibenebene in Richtung A- oder B-Säule kann man
1. die Hilfsschiene 14 mit Hilfe eines Langlochs 18 in Richtung F verschwenken und
2. den Anlenkpunkt 13 horizontal auf der Führungs- und Hebeschiene 105' parallel versetzen.

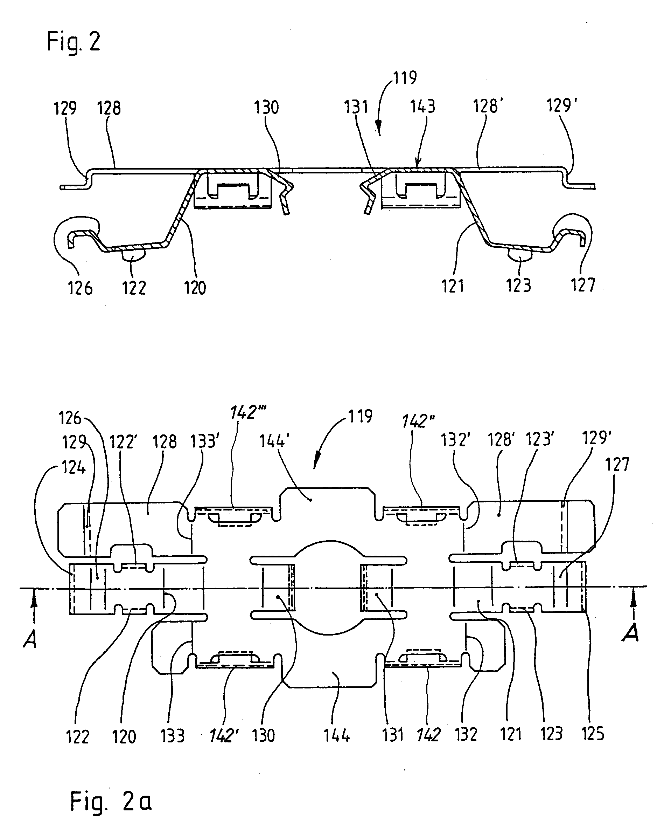

Für die oben unter 2. genannte Parallelversetzung des Anlenkpunktes 13 ist eine in Figur 2 und Figur 2a dargestellte erste Federspange 119 aus gehärtetem Federstahl vorgesehen.

In Figur 2 ist die erste Federspange 119 in geschnittener Seitenansicht AA und in Figur 2a in der Draufsicht dargestellt. Sie ist zur Achse des Anlenkpunkts 13 in Längsrichtung symmetrisch aufgebaut. Die erste Federspange 119 weist in ihren Außenbereichen Federarme 128, 128' mit jeweils einem deckelförmigen Absatz 129, 129' auf. Die Federarme 128, 128' weisen in einem stumpfen Winkel gegenüber der Federspangen-Grundebene 143 nach unten. Neben diesen mit deckelförmigen Absätzen versehenen Federarmen 128, 128' befinden sich parallel dazu zwei weitere Federarme 120, 121, die sich aus der Federspangen-Grundebene 143 heraus nach unten erstrecken und an ihren Enden Lappen 122, 123 aufweisen, die mit später noch zu beschreibenden Einrastelementen zusammenarbeiten. An den äußersten Enden dieser Federarme 120, 121 befinden sich Rücksprungflächen 126, 127 zur Erleichterung der Betätigung der Federarme bei einer evtl. notwendig werdenden Nullpunktverstellung.

In den mittleren kreisringförmigen Ausschnitt der ersten Federspange 119 ragen zwei nasenförmige Klipszungen 130, 131, die in stumpfem Winkel aus der Federspangen-Grundebene 143 herausgebogen sind. An ihnen wird das Anlenkteil 139 (nicht dargestellt) befestigt. Schließlich ist die erste Federspange 119 für ihre Befestigung mit dem Führungs- und Hebeschienenstück 105′ etwa im Bereich der federnden Abknickungen 132, 132′; 133, 133′ mit Halte- und Führungskrallen 142, 142′, 142˝, 142‴, versehen. An den Federarmen 122, 123 befinden sich parallelsymmetrisch zu den Lappen 122 und 123 zwei weitere Lappen 122′ und 123′ zur Verbesserung des Eingriffs dieser Federarme in die später noch zu beschreibenden Einrastelemente.

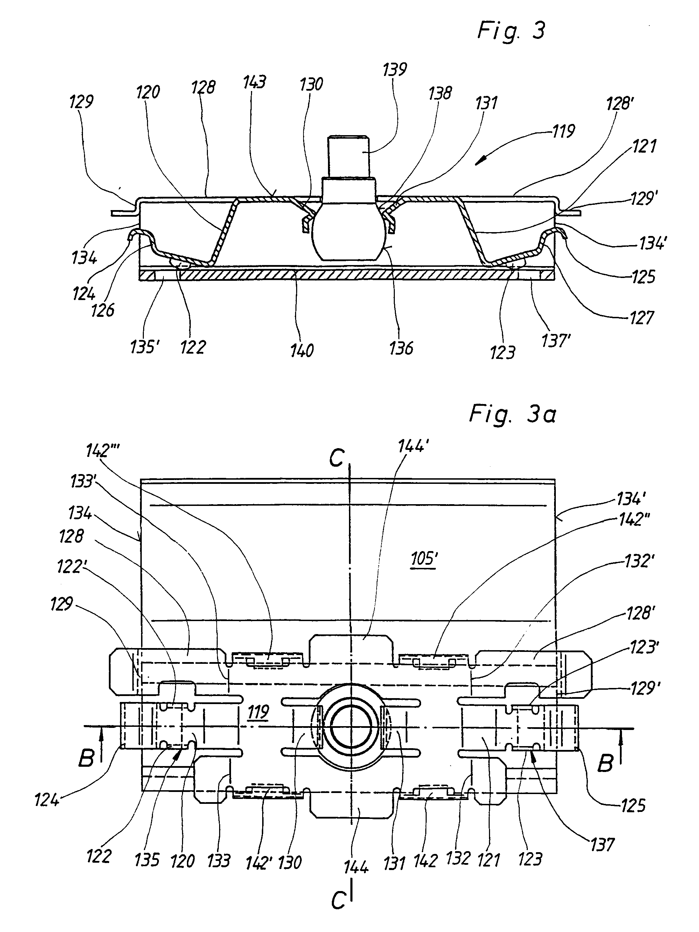

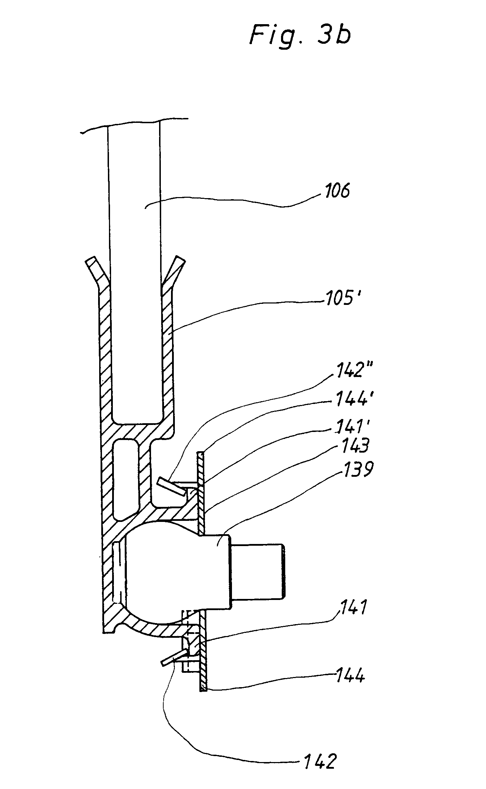

In den Figuren 3, 3a und 3b ist die erste Federspange 119 im Einbauzustand mit den Führungs- und Hebeschienenstück 105′ und dem Anlenkteil in Form eines zylindrischen Schwenkbolzens 139 dargestellt. Figur 3 ist ein Längsschnitt entlang der Linie BB in Figur 3a. In der Nullstellung der Federspange 119 gegenüber dem Führungs- und Hebeschienenstück 105′ umgreifen deckelförmige Absätze 129, 129′ der Federarme 128, 128′ der ersten Federspange 119 die Stirnwände 134, 134′ des Führungs- und Hebeschienenstücks 105′. Über die nasenförmigen Klipszungen 130, 131 wird das Anlenkteil in Form des zylindrischen Schwenkbolzens 139, der am nicht dargestellten Hilfsarm 4 befestigt ist, gehalten und drehbar geführt. Die abgeflachte Halbkugel 136 des Schwenkbolzens 139 arbeitet mit einem U-förmigen Profil (Figur 3b) des Führungs- und Hebeschienenstücks 105′ zusammen. Sie wird über die erste Federspange 119 und deren Führungskrallen 142, 142′, 142'', 142''' sowie über die Haltestege 141, 141' im Führungs- und Hebeschienenstück 105' gehalten. Der erste und der zweite Federarm 120, 121 liegen im der dargestellten Nullstellung der Federspange 119 mit diesen Lappen 122, 122' und 123, 123' am Profilgrund des U-förmigen Profils an. Diese Lappen sind daher nicht in den am Grund des U-förmigen Profils angeordneten Aussparungen 135, 135'; 137, 137' eingerastet.

Die Wirkungsweise der Vorrichtung zur einstellbaren Befestigung einer Autofensterscheibe an einer Fensterhebeeinrichtung ist folgende:
Stellt sich aufgrund einer neuen Charge von Autotüren oder Fensterscheiben heraus, daß die werksseitige Einstellung der Nullstellung der ersten Federspange 119 am Führungs- und Hebeschienenstück 105' nicht mehr zu einer optimalen Fensterscheibenführung in der Autotür führt, sondern diese verklemmt, so wird je nach Klemmrichtung die erste Federspange 119 auf der Führungs- und Hebeschiene 105' horizontal nach rechts oder nach links verschoben. Dazu müssen zuerst die deckelförmigen Absätze 129, 129' von den Stirnwänden 134, 134' abgehoben werden. Sodann verschiebt man die Federspange 19 mit Hilfe der Verschiebelasche 144, 144' solange nach links bis die Lappen 122, 122' des Federarms 120 in die am Profilgrund der Führungs- und Hebeschiene 105' befindliche Aussparung 135 einrastet. Gleichzeitig muß man beim Verschieben der ersten Federspange 119 zum Lösen der Halte- und Führungskrallen 142, einen Druck an den federnden Abknickungen 132, 132', 133, 133' auf die erste Federspange 119 ausüben. Dadurch löst sich die Verkrallung der Halte- und Führungskrallen und die erste Federspange 119 kann leichter in die gewünschte Richtung verschoben werden.

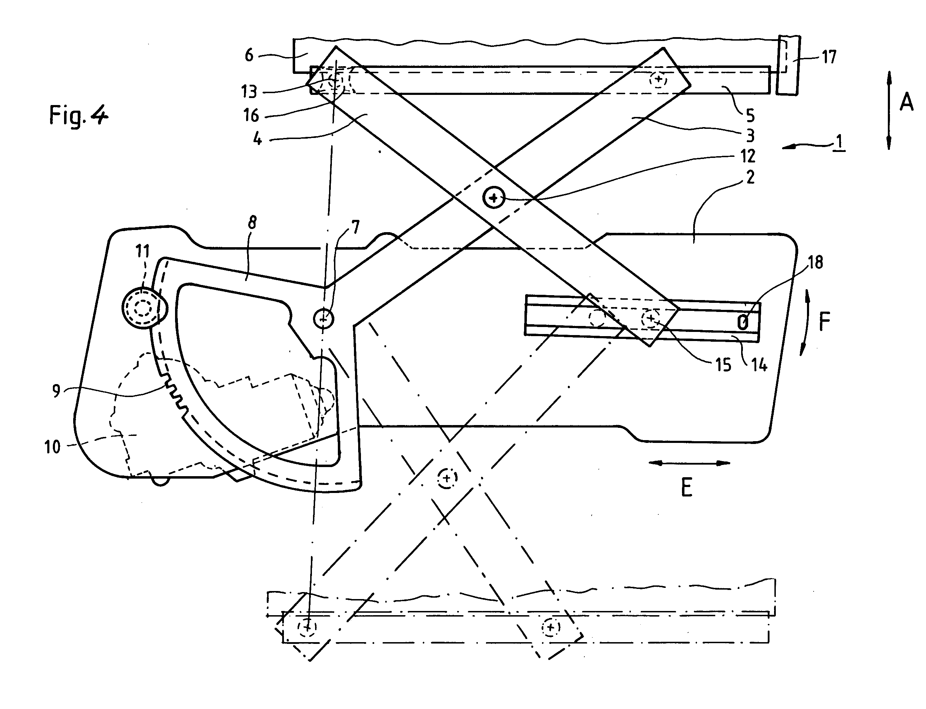

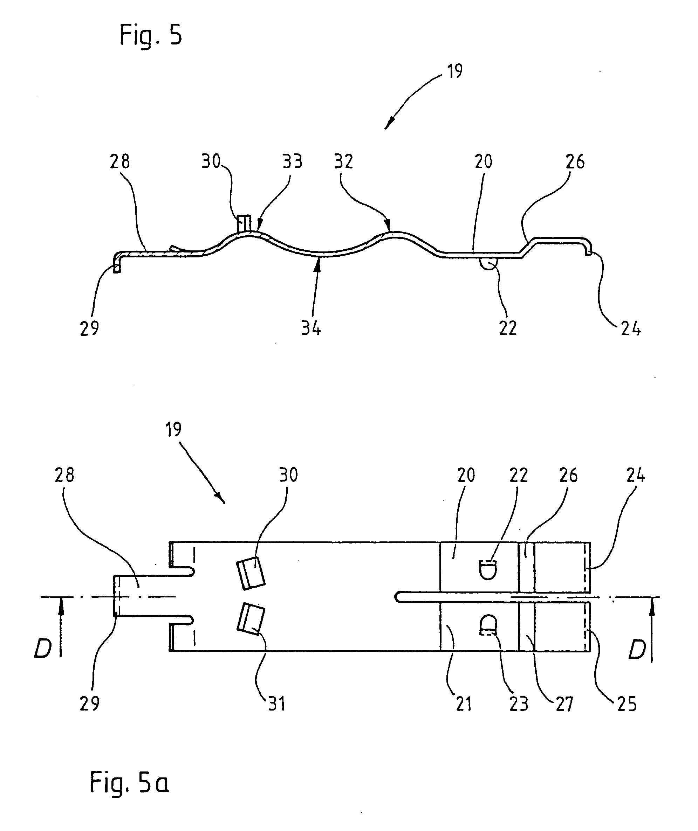

Im folgenden wird eine andere beispielsweise Ausführungsform einer zweiten Federspange, die in den Figuren 4 - 6b dargestellt ist, beschrieben. Figur 4 entspricht bis auf die Führungs- und Hebeschienen 105, 105', die Fensterscheibe 106' und das Gleitstück 16 identisch der bereits beschriebenen Figur 1. Aufbau und Wirkungsweise dieser Anordnung sind daher bis auf das Gleitstück 16, das aus Kunststoff besteht, wie oben beschrieben. Für das oben bereits erwähnte eventuell notwendige werdende Versetzen dieses Gleitstückes in horizontaler Richtung auf der Führungs- und Hebeschiene 105' ist eine in Figur 5 und Figur 5a dargestellte zweite Federspange 19 aus gehärtetem Federstahl vorgesehen.

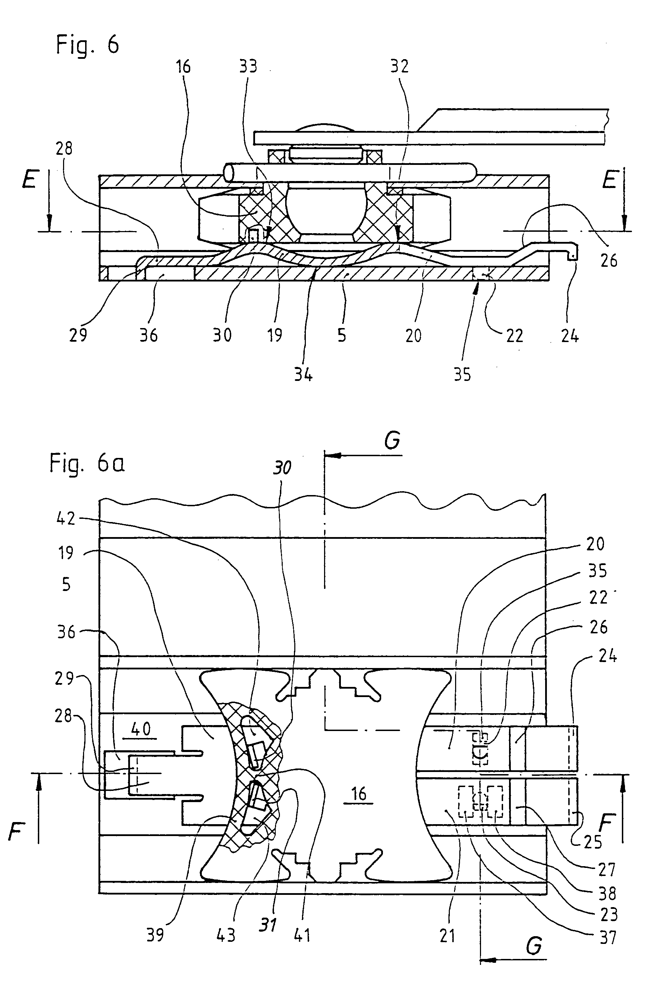

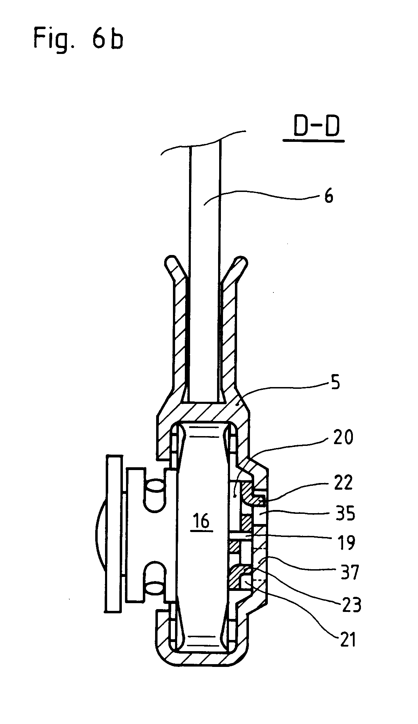

Figur 5 ist die zweite Federspange in geschnittener Seitenansicht aus der Ansicht DD dargestellt. Sie weist in ihrem mittleren Bereich eine gewellte Form auf und trägt an ihrem rechten Ende einen ersten Federarm 20 sowie einen zweiten Federarm 21 (Figur 5a). Die Federarme 20 und 21 befinden sich rechts und links zur Mittelachse der zweiten Federspange 19, so daß diese an ihrem rechten Ende etwa zur Hälfte geschlitzt ist. Beide Federarme weisen an ihrer Unterseite aus dem Material der zweiten Federspange nach unten umgebogene, zungenförmige Lappen 22 und 23 auf, die in später noch zu beschreibende Aussparungen einer durchgehenden Führungs- und Hebeschiene 5 (Figur 6) einrasten. An den Endbereichen der Federarme 20 und 21 sind weiterhin nach unten umgebogene, widerhakenförmige Umbiegungen 24 und 25 angeordnet. Damit diese Umbiegungen 24 und 25 nicht auf der Profilschiene (Figur 6) zu liegen kommen und diese zerkratzen, sind ausgehend von der Ebene der Lappen 22 und 23 in vorteilhafter Weise schräge Rücksprungflächen 26 und 27 auf den Federarmen 20 und 21 vorgesehen. Am anderen Ende der zweiten Federspange 19 ist ein mit Abstand von den beiden Federarmen 20 und 22 mittig angeordneter weiterer Federarm 28 vorgesehen. Dieser Federarm 28 endet mit einem nach unten umgebogenen Halte- und Führungslappen 29, der in eine noch in Figur 6 zu beschreibende Ausparung in der Führungs- und Hebeschiene eingreift. Zwischen dem links- und rechtsseitigem Federarm 28 sowie 20 und 21 weist die wellenförmig ausgebildete zweite Federspange 19 auf einer ihrer wellenförmigen Ausbuchtungen 33 zwei in entgegengesetzter Richtung zu den Lappen 22 und 23 umgebogene Zungen 30 und 31 auf. Diese Zungen 30 und 31 sind für die später in Figur 6 noch zu beschreibenden Befestigungen und Halterungen des Gleitstücks 16 vorgesehen.

In den Figuren 6, 6a und 6b ist eine Ausschnittsvergrößerung des in Figur 4 dargestellten, oberen Anlenkpunktes 13 des Hilfsarmes 4 mit dem Gleitstück 16 in der profilierten, durchgehenden Führungs-und Hebeschiene 5 in eingebautem Zustand mit der zweiten Federspange 19 dargestellt. In Figur 6 ist die in Figur 5 im Schnitt gezeigte zweite Federspange 19 zusammen mit dem Gleitstück 16 (Figur 4) im eingebautem Zustand in der Führungs- und Hebeschiene 5 dargestellt. Die Federspange 19 drückt sich einerseits mit ihren zwei wellenförmigen Ausbuchtungen 32 und 33 am Gleitstück 16 und andererseits mit der entgegengesetzten wellenförmigen Ausbuchtung 34 und dem Federarm 20 bzw. dem nicht dargestellten Federarm 21 an der profilierten Führungs- und Hebeschiene 5 ab. Dabei greift der Federarm 20 mit seinem umgebogenen Lappen 22 in eine erste kleine rechteckförmige Aussparung 35 der Schiene 5 ein. Durch die Vorspannung der aus gehärtetem Federstahl bestehenden Federspange wird das Gleitstück 16 gegen die Schiene 5 gedrückt und mit Hilfe der Zunge 30 und 31 (Figur 6a) in Verschieberichtung gehalten und geführt. Eine Verlängerung über den Lappen 22 am Federarm 20 hinaus in Form der schrägen Rücksprungläche 26 weist eine widerhakenförmige Umbiegung 24 hinter dem Ende der Schiene 5 auf. Am anderen Ende der zweiten Federspange 19 befinden sich der mittig angeordnete weitere Federarm 28 mit einem nach unten umgebogenen Halte-und Führungslappen 29, der in eine ihm zugeordnete, entsprechende Aussparung 36 eingreift. Die Aussparung 36 stellt eine Verstellwegbegrenzung der Federspange in der Schiene 5 dar und schützt bei der Justage vor einem Weggleiten von Federspange 19 und Gleitstück 16 außerhalb der Reichweite des Montagewerkzeuges in die Profilschiene hinein.

Figur 6a zeigt im Schnitt EE eine Draufsicht auf die Detaildarstellung von Figur 6 mit dem Gleitstück 16, der Federspange 19 und der Führungs- und Hebeschiene 5. Der erste Federarm 20 der zweiten Federspange 19 greift mit seinem umgebogenen Lappen 22 in die strichliert dargestellte, kleine, rechteckige Ausnehmung 35 der Schiene 5 ein. Dagegen kommt der zweite Federarm 21 mit seinem umgebogenen Lappen 23 zwischen der zweiten und dritten Aussparung 37 und 38 (gleichfalls strichliert dargestellt) auf dem Profilgrund 40 der Führungs- und Hebeschiene 5 zu liegen. Der Abstand zwischen der zweiten Aussparung 37 und der dritten Aussparung 38 entspricht etwa der Breite der Aussparung 35.

In der herausgebrochenen Darstellung des Gleitstücks 16 sind die längs der Wandung 39 schräggestellten Zungen 30 und 31 der zweiten Federspange 19 im Eingriff in die Aussparung 42, 43 des Gleitstückes 16 zu sehen. Durch die Schrägstellung wird ein besonders guter Halt der Federspange in den Aussparungen 42 und 43 des Gleitstückes 16 ohne die Möglichkeit des Abrutschens erreicht. Die Zwischenwand 41 des Gleitstückes 16 ist etwas dicker als der Abstand der beiden Zungen 30 und 31 auf der Federspange 19 voneinander. Damit kann die Federspange 19 bei der Fertigung bequem auf das Gleitstück 16 aufgeklipst werden. Das linksseitige Ende der Federspange 19 ragt mit dem Federarm 28 und dem Halte- und Führungslappen 29 in die den Verstellweg der Aussparung 35, 37 und 38 begrenzende Aussparung 36.

In Figur 6b ist ein Schnitt längs der Linie GG von Figur 6a dargestellt. Im oberen Teil ist die Autofensterscheibe 6 abgebrochen in der Führungs- und Hebeschiene 5 verankert gezeichnet. Das Gleitstück 16 gleitet federnd innerhalb der Führungsbahnen der Schiene 5. Rechts neben dem Gleitstück 16 befinden sich die zweite Federspange 19, die über ihre Federarme 20 und 21 gegen den Profilgrund 40 der U-förmig profilierten Schiene 5 drückt.

Dabei fällt der umgebogene Lappen 22 des Federarms 20 in die kleine, rechtwinklige Aussparung 35 der Schiene ein. Der unter dem Federarm 20 angeordnete Federarm 21 drückt sich dagegen über den umgebogenen Lappen 23 auf dem Profilgrund 40 der Schiene ab. Der Lappen kann an dieser Stelle nicht in die kleine, rechteckige Aussparung 37 in der Schiene eingreifen. Die Fixierung der zweiten Federspange 19 mit dem Gleitstück 16 wurde aus Übersichtlichkeitsgründen in dieser Darstellung nicht gezeichnet.

Zur Erläuterung der Wirkungsweise dieser zweiten erfindungsgemäßen Vorrichtung sei Figur 6a näher betrachtet. Zwischen der als Profilschiene 5 ausgebildeten Führungs- und Hebeschiene und dem Gleitstück 16 befindet sich im Profilgrund 40 die gehärtete Federspange 19 aus Federstahl. Sie greift einerseits mit ihren Zungen 30 und 31 hinter die Wandung 39 des Gleitstückes 16 und andererseits über ihren Federarm 20 und dem umgebogenen Lappen 22 in die strichliert dargestellte, darunter befindlichen Aussparung 35 der Schiene 5. Neben dieser Aussparung 35 befinden sich im Eingriffsbereich des Federarms 21 mit seinem Lappen 23 zwei weitere rechteckförmige Aussparungen 37 und 38, deren Mittenabstand dem Doppelten Ihrer Breite entspricht. Durch diese Art der Anordnung der Aussparung 35, 36 und 38 kann die zweite Federspange 19, und damit das Gleitstück 16 bzw. der Anlenkpunkt 13 des Kreuzarmfensterhebers 1 in sehr kleinen Schritten gegenüber der Führungs- und Hebeschiene 5 fixiert und justiert werden. In Figur 6 ist die Nullstellung des Gleitstückes 16 gegenüber der Schiene 5 dargestellt. Will man eine Verschiebung des Anlenkpunktes 13 bzw. des Gleitstückes 16 gegenüber der profilierten Führungs- und Hebeschiene 5 bei der Justierung des Kreuzarmfensterhebers 1 nach links erreichen, hebt man über ein entsprechendes, hakenförmiges Werkzeug (nicht dargestellt) durch die Kreuzarmhebergestänge von der Türinnenseite aus an der widerhakenförmigen Umbiegung 24 den ersten Federarm 20 mit seinem Lappen 22 aus der rechteckförmigen Aussparung der Schiene 5 heraus und verschiebt die Federspange mitsamt dem Gleitstück 16 soweit nach links, bis der umgebogene Lappen 23 des Federarms 21 in die unter ihr befindliche, strichliert dargestellte Ausnehmung 37 der Schiene 5 einrastet. Damit ist das Gleitstück und die Federspange um die Breite einer Aussparung nach links verschoben worden. Die Federspange hat dabei das Gleitstück 16 über die nach oben gebogene Zunge 30 und 31 mitgenommen. Will man, nachdem diese Einjustierung des Kreuzarmhebers 1 nicht zum Erfolg einer einwandfrei in den Führungen der Tür gleitenden Fensterscheibe geführt hat, eine Justierung in die andere Richtung vornehmen, muß das hakenförmige Werkzeug hinter die Umbiegung 25 des Federarms 21 greifen, um den Lappen 23 aus der rechteckförmigen Aussparung 37 herausheben und gleichzeitig die gesamte zweite Federspange 19 mit dem Gleitstück 16 nach rechts ziehen, bis der Lappen 23 in die strichliert dargestellte Aussparung 38 der Schiene 5 einschnappt. Erst dann kann das hakenförmige Werkzeug aus der Umbiegung 25 entfernt werden und ein erneuter Versuch des einwandfreien Laufs der Fenster scheibein den Führungen vorgenommen werden.

Damit bei dem Versuch des seitlichen Verschiebens der Federspange mit dem hakenförmigen Werkzeug die Federspange nicht vollkommen aus dem Verstellbereich versehentlich herausgerissen wird, befinden sich am hinteren Ende der zweiten Federspange 19 der Federarm 28 mit dem Halte- und Führungslappen 29, der in eine entsprechende Verstellwegbegrenzungsaussparung 36 eingreift. Die Aussparung 36 ist daher ein wenig größer als der Verstellweg, der durch die Aussparung 35, 36 und 38 möglich ist.

Die Erfindung ist selbstverständlich auf diese drei geschilderten Einstellfälle nicht beschränkt, sondern kann durch Anordnung weiterer Aussparungen auf der Profilschiene 5 bzw. weiterer Federarme an der zweiten Federspange 19 in beliebiger Breite und Justierschrittunterteilung variiert werden.

## Patentansprüche

1. Vorrichtung zur einstellbaren Befestigung einer Autofensterscheibe (6, 106) an einer Fensterhebeeinrichtung (1), die ein Anlenkteil (136, 16) aufweist, das an einer mit der Autofensterscheibe (6, 106) verbundenen Führungs- und Hebeschiene (105, 5) anlenkbar und horizontal auf der Führungs- und Hebeschiene (105, 5) verstellbar ist,
**dadurch gekennzeichnet**,
daß zwischen der Führungs- und Hebeschiene (105, 5) und dem Anlenkteil (136, 16) eine am Anlenkteil (136, 16) und der Führungs- und Hebeschiene (105, 5) fixierbare Federspange (119, 19) angeordnet ist, die mehrere Schnappelemente (129, 129', 122, 123, 22, 23) aufweist, von denen wenigstens ein Schnappelement (129, 129', 122, 123, 22, 23) in eines oder mehrere horizontal auf der Führungs- und Hebeschiene (105, 5) mit Abstand voneinander liegende Einrastelemente (134, 134', 135, 135', 137, 137', 35, 37, 38) zur horizontalen Verstellung der Federspange (119, 19) einrastbar ist.

2. Vorrichtung nach Anspruch 1, **dadurch gekennzeichnet,** daß das Anlenkteil in Form eines Schwenkbolzens (139) ausgebildet ist, der an seinem der U-förmigen Führung der Führungs- und Hebeschiene (105') zugewandten Ende mit einer abgeflachten Halbkugel (136) und an seinem anderen Ende von zwei nasenförmigen Klipszungen (130, 131) der Federspange (119) an einer konischen Fläche (138) gehalten wird, wobei die konische Fläche in Höhe der Federspangen-Grundebene (143) als zylindrischer Schwenkbolzen (139) zur getrieblichen Anlenkung mit der Fensterhebeeinrichtung (1) ausläuft.

3. Vorrichtung nach Anspruch 1 oder 2, **dadurch gekennzeichnet,** daß die Federspange (119) die Führungs- und Hebeschiene (105') über zwei an einer ihrer Längsseiten angeordnete, einander gegenüberliegende, mit Absätzen (129, 129') versehene Federarme (128, 128') deckelförmig an den Stirnwänden (134, 134') umgreift, daß die Federspange (119) einerseits an den Federarmanlenkungen (132, 133) und andererseits auf ihrer gegenüberliegenden Längsseite (132', 133') über Halte- und Führungskrallen (142, 142', 142'', 142''') an der Führungs- und Hebeschiene (105') gehalten und geführt wird, und daß sie mittig zwei weitere, einander in Längsrichtung der Federspangen gegenüberliegende mit Lappen (122, 123) versehene Federarme (120, 121) aufweist, die in entsprechende Aussparungen (135, 137) in der Führungs- und Hebeschiene (105') einrastbar sind.

4. Vorrichtung nach Anspruch 3, **dadurch gekennzeichnet,** daß die Federspange (119) über Halte- und Führungskrallen (142, 142') an Haltestegen (141, 141') der Führungs- und Hebeschiene (105') einklipsbar ist.

5. Vorrichtung nach Anspruch 3 oder 4, **dadurch gekennzeichnet,** daß die Federarme (120, 121) jeweils zwei aus ihnen herausgetrennte zur Symmetrieachse der Federspange, parallele umgebogene Lappen (122, 122', 123; 123') aufweisen, die in entsprechende Aussparungen (135, 135'; 137, 137') der Führungs- und Hebeschiene (105') einrastbar sind.

6. Vorrichtung nach Anspruch 5, **dadurch gekennzeichnet,** daß das freie Ende der Lappen (122, 122'; 123, 123') abgerundet ist.

7. Vorrichtung nach einem oder mehreren der vorangehenden Ansprüche, **dadurch gekennzeichnet,** daß die nasenförmigen Klipszungen (130, 131) der Federspange (119) zwei gegeneinander gerichtete widerstandsfähige, aus der Federspangen-Grundebene (143) stumpfwinklig herausgebogene Zungen aufweisen, die spitzwinklig an der Konusfläche (138) des Schwenkbolzens (139) umgebogen sind.

8. Vorrichtung nach Anspruch 7, **dadurch gekennzeichnet,** daß die Klipszungen (330, 131) nach den spitzwinkligen Umbiegungen nochmals stumpfwinklig in Richtung der Halbkugelfläche (136) des Schwenkbolzens (139) zurückgebogen sind.

9. Vorrichtung nach einem oder mehreren der vorangehenden Ansprüche, **dadurch gekennzeichnet,** daß die Federspange an den vier äußersten Ecken ihrer Grundebene (143) durch federnde Abknickungen (132, 132'; 133, 133') in Richtung der abgeflachten Haltestege (141, 141') der U-förmigen Führungs- und Hebeschiene (105') federnd gelagert ist.

10. Vorrichtung nach einem oder mehreren der vorangehenden Anprüche, **dadurch gekennzeichnet,** daß die Federspange (119) in ihrem mittleren Bereich zwischen den Halte- und Führungskrallen (142, 142') zwei einander gegenüberliegende über die abgeflachten Haltestege (141, 141') hinausragende Verschiebelaschen (144, 144') aufweist.

11. Vorrichtung nach Anspruch 1, **dadurch gekennzeichnet,** daß das Anlenkteil in Form eines an sich bekannten Gleitstücks (16) aus Kunststoff ausgebildet ist, das in der Führungs- und Hebeschiene (5) verschiebbar ist, wobei Lappen (22, 23) einer mit dem Gleitstück verbundenen Federspange (19) an über das Gleitstück (16) hinausragenden Federarmen (20, 21) angeordnet sind, die mit Aussparungen in der Führungs- und Hebeschiene (5) zusammenarbeiten.

12. Vorrichtung nach Anspruch 11, **dadurch gekennzeichnet,** daß die Federspange (19) in Längsrichtung auf einem Drittel ihrer Länge mittig so geschlitzt ist, daß sie zwei Federarme (20, 21) aufweist, daß jeder dieser Federarme (20, 21) wenigstens einen Lappen (22, 23) aufweist, daß die beiden Lappen (22, 23) zugeordneten Aussparungen (35, 37, 38) in Verschieberichtung gegeneinander versetzt sind, wobei die Federspange (19) zusätzlich mit zwei Zungen (30, 31) versehen ist, die in Aussparungen (42, 43) des Gleitstücks (16) eingreifen.

13. Vorrichtung nach Anspruch 11 oder 12, **dadurch gekennzeichnet,** daß die Breite der Aussparungen (35, 37, 38) etwa gleich ihrem halben Mittenabstand ist.

14. Vorrichtung nach Anspruch 13, **dadurch gekennzeichnet,** daß die in das Gleitstück (16) eingreifenden Zungen (30, 31) der Federspange (19) parallel zur Wandung des Gleitstücks (16) in einem stumpfen Winkel zueinander aus der Federspange (19) herausgetrennt und umgebogen sind.

15. Vorrichtung nach Anspruch 14, **dadurch gekennzeichnet,** daß die Zungen (30, 31) mit einem Abstand zueinander auf der Federspange (19) angeordnet sind, der etwas kleiner ist, als die Dicke einer Zwischenwand (41) des Gleitstücks (16), so daß die Federspange (19) bei der Montage über die Zungen (30, 31) in das Gleitstück (16) einklipsbar ist.

16. Vorrichtung nach einem oder mehreren der vorangehenden Ansprüche 11 - 15, **dadurch gekennzeichnet,** daß die Federspange (9) gewellt ist.

17. Vorrichtung nach einem oder mehreren der vorangehenden Ansprüche 11 - 16, **dadurch gekennzeichnet,** daß die Federarme (20, 21) stumpfwinklig an der Federspange (19) angeordnet sind.

18. Vorrichtung nach einem oder mehreren der vorangehenden Ansprüche 11 - 17, **dadurch gekennzeichnet,** daß die Federarme (20, 21) an ihren äußersten Enden widerhakenförmige Umbiegungen (24, 25) aufweisen.

## Claims

1. Device for adjustably fixing a car window pane (6, 106) on a window winder mechanism (1) which has a connecting part (136, 16) which can be attached to a guide and lift rail (105, 5) connected to the car window pane (6, 106) and which can be displaced horizontally on the guide and lift rail (105, 5),
characterised in that
between the guide and lift rail (105,5) and the connecting part (136, 6) there is a spring clasp (119, 19) which is fixable on the connecting part (136, 16) and the guide and lift rail (105, 5) and which has several snap elements (129, 129', 122, 123, 22, 23) of which at least one snap element (129, 129', 122, 123, 22, 23) can engage with detent action in one or more detent elements (134, 134', 135, 135', 137, 137', 35, 37, 38) spaced out from each other horizontally on the guide and lift rail (105, 5) for the horizontal adjustment of the spring clasp (119, 19).

2. Device according to claim 1, characterised in that the connecting part is designed in the form of a swivel bolt (139) which is held at its end facing the U-shaped guide of the guide and lift rail (105') with a flattened semisphere (136) and at its other end by two nose-like clip tongues (130, 131) of the spring clasp (119) on a conical face (138) wherein the conical face extends level with the base plane (143) of the spring clasp as a cylindrical swivel bolt (139) for geared connection with the window winder mechanism (1).

3. Device according to claim 1 or 2 characterised in that the spring clasp (119) engages round the guide and lift rail (105') cover-like at the end walls (134, 134') through two opposite spring arms (128, 128') which are mounted on one of the longitudinal sides and have attachments (129, 129'), that the spring clasp (119) is held and guided on the guide and lift rail (105') on one side at the spring arm connections (132, 133) and on the other side on its opposite longitudinal side (132', 133') through retaining and guide claws (142, 142', 142'', 142'''), and that it has centrally two further spring arms (120, 121 lying opposite one another in the longitudinal direction of the spring clasps and provided with tabs (122, 123) which can engage in corresponding recesses (135, 137) in the guide and lift rail (105').

4. Device according to claim 3, characterised in that the spring clasp (119) can be clipped by retaining and guide claws (142, 142') on the retaining webs (141, 141') of the guide and lift rail (105').

5. Device according to claim 3 or 4 characterised in that the spring arms (120, 121) each have two tabs (122, ,122', 123; 123') separated out of the arms and bent round parallel to the axis of symmetry of the spring clasp to engage in corresponding recesses (135, 135'; 137, 137') of the guide and lift rail (105').

6. Device according to claim 5 characterised in that the free end of the tabs (122, 122'; 123,123') is rounded.

7. Device according to one or more of the preceding claims, characterised in that the nose-like clip tongues (130, 131) of the spring clasp (119) have two oppositely aligned resistant tongues which are bent at an obtuse angle out of the base plane (143) of the spring clasp and which are bent round at an acute angle at the cone face (138) of the swivel bolt (139).

8. Device according to claim 7, characterised in that the clip tongues (330, 131) after the acute-angled bent areas are bent back again at an obtuse angle in the direction of the semi-spherical face (136) of the swivel bolt (139).

9. Device according to one or more of the preceding claims, characterised in that the spring clasp is resiliently mounted at the four outermost corners of its base plane (143) by resilient bends (132, 132'; 133, 133') in the direction of the flattened retaining webs (141, 141') of the U-shaped guide and lift rail (105').

10. Device according to one or more of the preceding claims, characterised in that the spring clasp (119) has in its centre area between the retaining and guide claws (142, 142') two opposing displacement plates (144, 144') which project over the flattened retaining webs (141, 141').

11. Device according to claim 1, characterised in that the connecting part is designed in the form of a known slide member (16) of plastics which is displaceable in the guide and lift rail (5) wherein tabs (22, 23) of one spring clasp (19) connected to the slide member are mounted on spring arms (20, 21) which project over the slide member (16) and interact with recesses in the guide and lift rail (5).

12. Device according to claim 11, characterised in that the spring clasp (19) is slit centrally in the longitudinal direction over a third of its length so that it has two spring arms (20, 21), that each of these spring arms (20, 21) has at least one tab (22, 23), that the recesses (35, 37, 38) associated with the two tabs (22, 23) are off-set relative to each other in the displacement direction wherein the spring clasp (19) is provided additionally with two tongues (30, 31) which engage in recesses (42, 43) of the slide member (16).

13. Device according to claim 11 or 12, characterised in that the width of the recesses (35, 37, 38) is roughly equal to half the centre spacing.

14. Device according to claim 13 characterised in that the tongues (30, 31) of the spring clasp (19) engaging in the slide member (16) are separated out of the spring clasp (19) and bent round at an obtuse angle to each other parallel to the wall of the slide member (16).

15. Device according to claim 14 characterised in that the tongues (30, 31) are mounted on the spring clasp (19) at a distance from each other which is somewhat less than the thickness of an intermediate wall (41) of the slide member (16) so that during assembly the spring clasp (19) can be clipped into the slide member (16) by way of the tongues (30, 31).

16. Device according to one or more of the preceding claims 11- 15 characterised in that the spring clasp (9) is wavy.

17. Device according to one or more of the preceding claims 11 - 16, characterised in that the spring arms (20, 21) are arranged at an obtuse angle on the spring clasp (19).

18. Device according to one or more of the preceding claims 11- 17 characterised in that the spring arms (20, 21) have barb-like bent areas (24, 25) at their outermost ends.

## Revendications

1. Dispositif de fixation réglable d'une vitre de voiture (6, 106) sur un dispositif lève-vitre (1) présentant une pièce d'articulation (136, 16) qui peut être articulée à un rail de guidage et de levage (105, 5) assemblé à la vitre de voiture (6, 106) et qui peut être déplacée horizontalement sur le rail de guidage et de levage (105, 5), caractérisé en ce qu'il existe, entre le rail de guidage et de levage (105, 5) et la pièce d'articulation (136, 16),une agrafe élastique (119, 19) pouvant être fixée à la pièce d'articulation (136, 16) et au rail de guidage et de levage (105, 5) qui comporte plusieurs éléments d'encliquetage (129, 129', 122, 123, 22, 23) dont au moins un élément d'encliquetage (129, 129', 122, 123, 22, 23) peut venir s'encliqueter dans un ou plusieurs éléments d'encliquetage(134, 134', 135, 135', 137, 137', 35, 37, 38) placés horizontalement à une certaine distance les uns des autres sur le rail de guidage et de levage (105, 5), pour permettre le réglage horizontal de l'agrafe élastique (119, 19).

2. Dispositif selon la revendication 1, caractérisé en ce que la pièce d'articulation se présente sous forme d'un boulon de pivotement (139) qui est maintenu à son extrémité tournée vers le guidage en forme de U du rail de guidage et de levage (105') par un hémisphère aplati (136) et, à son autre extrémité, par deux languettes de clipsage en forme de nez (130,131) de l'agrafe élastique (119) sur une face conique (138), dans lequel la face conique se prolonge à hauteur du plan de base de l'agrafe élastique (143) sous forme d'un boulon de pivotement cylindrique (139) pour assurer l'entraînement avec articulation du dispositif lève-vitre (1).

3. Dispositif selon la revendication 1 ou 2, caractérisé en ce que l'agrafe élastique (119) entoure le rail de guidage et de levage (105') par deux bras élastiques (128, 128') en forme de couvercle sur les parois frontales pourvues de gradins (129, 129') opposés l'un à l'autre et disposés sur leurs côtés longitudinaux, en ce que l'agrafe élastique (119) est maintenue et guidée, d'une part, par les articulations de bras élastique (132, 133) et, d'autre part, par son côté longitudinal opposé (132', 133') par des griffes de maintien et de guidage (142, 142', 142''') sur le rail de guidage et de levage et en ce qu'elle présente au centre deux autres bras élastiques (120, 121) pourvus de pattes (122, 123) opposées dans la direction longitudinale des agrafes élastiques, ces bras pouvant s'engager dans des cavités correspondantes (135, 137) du rail de guidage et de levage (105').

4. Dispositif selon la revendication 3, caractérisé en ce que l'agrafe élastique (119) peut être clipsée au moyen de griffes de maintien et de guidage (142, 142') sur des nervures de maintien (141, 141') du rail de guidage et de levage (105').

5. Dispositif selon la revendication 3 ou 4, caractérisé en ce que les bras élastiques (120, 121) présentent chacun deux pattes (122, 122', 123, 123') repliées et parallèles qui partent de ceux-ci depuis l'axe de symétrie de l'agrafe élastique, lesdites pattes pouvant s'engager dans des cavités correspondantes (135, 135', 137, 137') du rail de guidage et de levage (105').

6. Dispositif selon la revendication 5, caractérisé en ce que l'extrémité libre des pattes (122, 122', 123, 123') est arrondie.

7. Dispositif selon une ou plusieurs des revendications précédentes, caractérisé en ce que les languettes de clipsage en forme de nez (130, 131) de l'agrafe élastique (119) présentent deux languettes repliées à angle obtus depuis le plan de base de l'agrafe élastique présentant une bonne résistance et orientées l'une contre l'autre, qui sont repliées à angle aigu sur la surface conique (138) du boulon de pivotement (139).

8. Dispositif selon la revendication 7, caractérisé en ce que les languettes de clipsage (330, 131) sont repliées, après le repli à angle aigu, encore une fois à angle obtus dans la direction de la surface hémisphérique (136) du boulon de pivotement (139).

9. Dispositif selon une ou plusieurs des revendications précédentes,caractérisé en ce que l'agrafe élastique est montée élastiquement par les quatre angles extérieurs de son plan de base (143) au moyen de replis élastiques (132, 132', 133, 133') dans la direction de la nervure de maintien aplatie (141, 141') du rail de guidage et de levage (105') en forme de U.

10. Dispositif selon une ou plusieurs des revendications précédentes, caractérisé en ce que la languette élastique (119) présente, dans sa zone centrale entre les griffes de maintien et de guidage (142, 142'), deux pattes de déplacement (144, 144') en saillie opposées l'une à l'autre par-dessus les nervures de maintien aplaties (141, 141').

11. Dispositif selon la revendication 1, caractérisé en ce que la pièce d'articulation se présente sous forme d'un coulisseau connu en soi (16) en matière plastique qui peut se déplacer dans le rail de guidage et de levage (5) tandis que les pattes (22, 23) d'une agrafe élastique (19) assemblées au coulisseau sont disposées sur les bras élastiques (20, 21) faisant saillie au-dessus du coulisseau (16) et coopérant avec des cavités dans le rail de guidage et de levage (5).

12. Dispositif selon la revendication 11, caractérisé en ce que l'agrafe élastique (19) est fendue au milieu dans la direction longitudinale jusqu'à un tiers de sa longueur, en ce qu'elle présente deux bras élastiques (20, 21), en ce que chacun de ces bras élastiques (20, 21) présente au moins une patte (22, 23), en ce que les deux pattes (22, 23) sont décalées l'une par rapport à l'autre en direction de déplacement pour des cavités correspondantes (35, 37, 38) tandis que l'agrafe élastique (19) comporte, en outre, deux languettes (30, 31) qui s'engagent dans les cavités (42, 43) du coulisseau (16).

13. Dispositif selon la revendication 11 ou 12, caractérisé en ce que la largeur des cavités (35, 37, 38) est à peu près égale à la moitié de leur distance entre axes.

14. Dispositif selon la revendication 13, caractérisé en ce que les languettes (30, 31) de l'agrafe élastique (19) s'engageant dans le coulisseau (16) sont séparées l'une de l'autre parallèlement à la paroi du coulisseau (16) en formant entre elles un angle obtus depuis l'agrafe élastique (19) et sont repliées.

15. Dispositif selon la revendication 14, caractérisé en ce que les languettes (30, 31) sont disposées à une certaine distance l'une de l'autre sur l'agrafe élastique (19), cette distance étant un peu plus petite que l'épaisseur d'une paroi intermédiaire (41) du coulisseau (16), si bien que l'agrafe élastique (19) peut être clipsée dans le coulisseau (16) au cours du montage au moyen des languettes (30, 31).

16. Dispositif selon une ou plusieurs des revendications précédentes 11 - 15, caractérisé en ce que l'agrafe élastique (9) est ondulée.

17. Dispositif selon une ou plusieurs des revendications précédentes 11 - 16, caractérisé en ce que les bras élastiques (20, 21) sont disposés a angle obtus sur l'agrafe élastique (19).

18. Dispositif selon une ou plusieurs des revendications précédentes 11 - 17, caractérisé en ce que les bras élastiques (20, 21) présentent, à leurs extrémités extérieures, des replis en forme de crochets (24,25).
